# EUROPÄISCHE PATENTSCHRIFT

(11) **EP 1 840 681 B1**
(45) Veröffentlichungstag und Bekanntmachung des Hinweises auf die Patenterteilung: **25.11.2009**
(21) Anmeldenummer: 06006518.2
(22) Anmeldetag: 29.03.2006
(51) Int. Cl.: G05B 15/02, G05B 9/03, G05B 5/01, F16F 15/00, G05D 19/02

(54) **Verfahren und Vorrichtung zur Regelung von Schwingungsisolationssystemen**
Method and device for controlling vibration isolation systems
Procédé et dispositif destinés à la régulation de systèmes pour l'amortissement de vibrations

(43) Veröffentlichungstag der Anmeldung: 03.10.2007
(73) Patentinhaber: Integrated Dynamics Engineering GmbH, 65479 Raunheim (DE)
(72) Erfinder: Heiland, Peter, 65479 Raunheim (DE)
(74) Vertreter: Blumbach - Zinngrebe

(56) Entgegenhaltungen:
- EP-A- 0 074 862
- FR-A- 2 692 017
- GB-A- 2 000 609
- US-A- 2 946 943
- US-A- 3 705 978
- WATTERS B G ET AL: "A perspective on active machinery isolation" PROCEEDINGS OF THE 27TH CONFERENCE ON DECISION AND CONTROL AUSTIN, TEXAS, 7. Dezember 1988 (1988-12-07), Seiten 2033-2038, XP010071445

## Beschreibung

Die Erfindung bezieht sich auf das Steuern und Regeln eines Schwingungsisolationssystems mit einer Anzahl von Schwingungssignalgebern zur Lieferung von analogen Sensorsignalen und einer Anzahl von Aktoren zur Schwingungsunterdrückung durch Verarbeitung der Sensorsignale in Aktor-Stellsignale zur Ansteuerung der Aktoren.

Herkömmlicherweise werden zur Regelung von Schwingungsisolationssystemen Regelungsvorrichtungen verwendet, die die zur Verarbeitung der Sensorsignale in Aktor-Stellsignale notwendigen Berechnungen auf einer digitalen Ebene durchführen. Ein hierbei für die Verarbeitung eingesetzter digitaler Prozessor umfasst üblicherweise wenigstens einen digitalen Signalprozessor, einen sogenannten DSP. Die Verbindungen zur analogen Umgebung, also insbesondere zu den Schwingungssignalgebern, allgemein als Sensorik bezeichnet, des Schwingungsisolationssystems und den Aktoren, wie z.B. Motoren, des Schwingungsisolationssystems zum Entgegenwirken und in Folge zur Unterdrückung von mittels der Sensorik erfassten Schwingungen werden durch der Regelungsvorrichtung vorgeschaltete Analog-Digital-Wandler (AD-Wandler) bzw. der Regelungsvorrichtung nachgeschaltete Digital-Analog-Wandler DA-Wandler) hergestellt.

Dabei stellen die vorgeschalteten AD-Wandler die analogen Sensorsignale digitalisiert dem Prozessor zur Verfügung, welcher die Regelstrecken berechnet und hierauf basierend zunächst digitale Aktorsignale zur Verfügung stellt. Die nachgeschalteten DA-Wandler sorgen anschließend dafür, dass diese berechneten digitalen Aktorsignale zu Strom-/Spannungssignalen umgewandelt werden, welche anschließend von einem Verstärker verstärkt und den Aktoren zugeführt werden.

Derartige digitale Systeme arbeiten folglich notwendigerweise mit einer zeitdiskreten Verarbeitung, bei der in diskreten, definierten Intervallen die analogen Signale abgetastet werden (AD-Wandler) und bei der die zeitdiskreten Approximationen der verarbeiteten Signale durch Stufenapproximation wieder in analoge Signale gewandelt werden (DA-Wandler). Die Zeit zwischen zwei Abtastintervallen steht dem Prozessor für eine Verarbeitung der Regelungsgrößen zur Verfügung.

Der Vorteil einer digital arbeitenden Regelungsvorrichtung zur Regelung von Schwingungsisolationssystemen besteht insbesondere in der leichten Parametrisierbarkeit, da die Regelungsparameter digital zugänglich sind. Es ist daher möglich, umfangreiche Eingriffe in das Verhalten des Regelungssystems zu tätigen.

Ein wesentlicher Nachteil besteht jedoch darin, dass aufgrund der AD- und DA-Wandlung ein Zeitverzug zwischen Eingang und Ausgang der Regelungsgrößen eingeführt wird, der innerhalb des Regelungssystems einem Phasenverlust gleich kommt. Dieser Phasenverlust bedeutet für die meisten Regelungssysteme einen begrenzenden Faktor. Ein konstanter Zeitverzug bedeutet einen Phasenverlust, der linear mit der Frequenz wächst. Daher begrenzt dieser Phasenverlust die Frequenz-Bandbreite während der Regelung. Ferner kann die Abtastrate nur in dem Maß erhöht werden, wie innerhalb einer Abtastperiode alle Regelungsalgorithmen abgearbeitet werden können. In der Praxis bestimmt somit auch die Komplexität der notwendigen Verarbeitung der Regelungsgrößen zusammen mit der Rechenleistung des digitalen Prozessors die maximal mögliche Abtastrate und somit zusätzlich die kürzest mögliche Signallaufzeit innerhalb des Prozessors.

Verfahren und Vorrichtungen, um innerhalb eines Schwingungsisolationssystems auftretende bzw. zu unterdrückende Schwingungen daher von vorne herein auf einen Niederfrequenzbereich zu beschränken, sind bekannt, wobei beispielhaft auf die EP 0 927 380 B1 verwiesen wird.

Werden zur Regelung von Schwingungsisolationssystemen Regelungsvorrichtungen verwendet, die die zur Verarbeitung der Sensorsignale in Aktor-Stellsignale notwendigen Berechnungen auf einer analogen Ebene durchführen, wird hingegen der Phasenverlust nur durch die elektronischen Komponenten selbst bestimmt, da ohne zusätzlichen Zeitverzug gearbeitet werden kann. Mittels einstellbaren elektrischen Komponenten könnte dabei zwar ebenfalls Einfluss auf die Parametrisierung der Regelungsgrößen bzw. der zu regelnden Strecke genommen werden, allerdings bietet eine analog arbeitende Regelungsvorrichtung gegenüber einer digitalen Variante als einen wesentlichen Nachteil sehr schlechte Benutzereinflussmöglichkeiten.

In dem Dokument GB-A-2 000 609 ist ein "Feedback Control System" beschrieben zur Steuerung der Verschiebung einer aerodynamischen Steueroberfläche ("aerodynamic control surface") eines Luftfahrzeugs. Erste Verarbeitungsmittel werden mit einem Inputsignal versorgt. Durch eine digitale Verarbeitung wird ein Zwischensignal abgeleitet. Zweite Verarbeitungsmittel werden mit dem Zwischensignal versorgt und leiten einen "Output" ab. Die zweiten Verarbeitungsmittel arbeiten vorzugsweise analog. Die Niederfrequenz-Komponenten werden dem ersten Verarbeitungsmittel zugeführt. Die Hochfrequenz-Komponenten werden dem zweiten Verarbeitungsmittel zugeführt.

Eine Aufgabe der Erfindung besteht somit darin, einen Weg aufzuzeigen, mit welchem vorstehend aufgezeigten Nachteilen des Standes der Technik effektiv entgegengewirkt werden kann und mit welchem über eine wesentlich größere Frequenz-Bandbreite eines zu regelnden Schwingungsisolationssystems hinweg eine qualitativ hochwertige Parametrisierbarkeit und Regelungsleistung ermöglicht wird.

Die erfindungsgemäße Lösung der Aufgabe ist auf höchst überraschende Weise durch ein Verfahren und durch eine Vorrichtung mit den Merkmalen gemäß anhängender unabhängiger Ansprüche gegeben.

Vorteilhafte und/oder bevorzugte Ausführungsformen und Weiterbildungen der Erfindung sind Gegenstand der Unteransprüche.

Die Erfindung schlägt somit ein wesentlich verbessertes Verfahren zur Regelung eines Schwingungsisolationssystems, bei welchem mittels einer Anzahl von
Schwingungssignalgebern Schwingungen repräsentierende analoge Sensorsignalen geliefert werden, die Sensorsignale in Aktor-Stellsignale verarbeitet und die Aktor-Stellsignale Aktoren zur Ansteuerung zum Entgegenwirken der Schwingungen zugeführt werden, vor. Das Verfahren zeichnet sich dadurch aus, dass die Aufgaben der Regelung je nach Frequenzbereich geteilt werden und einige gelieferte Sensorsignale digitalisiert und in digitale Aktor-Stellsignale verarbeitet werden und andere gelieferte Sensorsignale analog in analoge Aktor-Stellsignale verarbeitet werden und, dass die digitalen Aktor-Stellsignale und die analogen Aktor-Stellsignalen zu gemeinsamen Aktor-Stellsignalen zusammengeführt werden, welche den Aktoren zur Ansteuerung zugeführt werden. Es wird für die Sensorsignale eine Übergangsfrequenz bestimmt, bei welcher von einem digitalen Verarbeiten der Sensorsignale zu einem analogen Verarbeiten der Sensorsignale übergegangen wird. Das Verfahren ist **dadurch gekennzeichnet, dass** zumindest in einem Übergangsbereich, innerhalb welchem die Sensorsignale digital und analog verarbeitet werden, der Beitrag der jeweiligen Verarbeitung gewichtet wird.

Ein wesentlicher Vorteil der Erfindung besteht folglich in der Zusammenführung zweier unterschiedlicher Technologien von Regelungen für Schwingungsisolationsanwendungen. Basierend auf einer digitalen Regelung und basierend auf einer analogen Regelung zusammen in einer Regelungsvorrichtung eines Schwingungsisolationssystems werden die Vorteile beider Technologien in zweckmäßiger und effektiver Weise genutzt, um in der Gesamtheit eine optimale Parametrisierbarkeit und Regelungsleistung zu ermöglichen.

Um je nach Anwendungsfall einem auftretenden Phasenverlust einer digitalen Regelung bei steigender Frequenz der zu verarbeitenden Sensorsignale entgegenzuwirken, wird, wie vorstehend ausgeführt, in zweckmäßiger Weise für die Sensorsignale eine Übergangsfrequenz bestimmt, bei welcher von einem digitalen Verarbeiten der Sensorsignale zu einem analogen Verarbeiten der Sensorsignale übergegangen wird. Die Aufgaben der Regelung werden somit je nach Frequenzbereich geteilt.

Um eine Überbewertung in einem gegebenenfalls vorhandenen Überlappungsbereich der Frequenzbereiche zu vermeiden, welches zu unangemessenen Aktor-Stellsignalen und in Folge zu einer unkorrekten Ansteuerung der Aktoren führen würde, werden bevorzugt, wie vorstehend ausgeführt, zumindest in einem Übergangsbereich, innerhalb welchem die Sensorsignale digital und analog verarbeitet werden, die Beitrage der jeweiligen Verarbeitung gewichtet.

In praktischer Umsetzung werden die Beiträge der jeweiligen Verarbeitung unter Verwendung von einem frequenzabhängigen Filter der Sensorsignale gewichtet.

Die Erfindung sieht ferner für das Zusammenführen der digitalen Aktor-Stellsignale und der analogen Aktor-Stellsignale vor, die digitalen Aktor-Stellsignale zunächst wieder zu analogisieren und anschließend mit den analogen Aktor-Stellsignalen aufzusummieren.

Zur Durchführung des erfindungsgemäßen Verfahrens schlägt die Erfindung ferner eine Regelungsvorrichtung eines Schwingungsisolationssystems vor, die zum Verarbeiten von analogen Sensorsignalen, die durch eine Anzahl von Schwingungssignalgebern des Schwingungsisolationssystems geliefert werden, in Aktor-Stellsignale, welche Aktoren des Schwingungsisolationssystems zu deren Ansteuerung zugeführt werden, ausgebildet ist. Die Aufgaben der Regelung werden je nach Frequenzbereich geteilt. Die Regelungsvorrichtung umfasst eine digital arbeitende Regelungseinrichtung zum Verarbeiten von Sensorsignalen in digitale Aktor-Stellsignale und eine analog arbeitende Regelungseinrichtung zum Verarbeiten von Sensorsignalen in analoge Aktor-Stellsignale, sowie eine mit beiden Regelungseinrichtungen eingangsseitig gekoppelte Eingangsschaltung zum Zuführen von Sensorsignalen der digital arbeitenden und der analog arbeitenden Regelungseinrichtung, und eine mit beiden Regelungseinrichtungen ausgangsseitig gekoppelte Ausgangsschaltung zum Zusammenführen von digitalen Aktor-Stellsignalen der digital arbeitenden Regelungseinrichtung und von analogen Aktor-Stellsignalen der analog arbeitenden Regelungseinrichtung zu gemeinsamen Aktor-Stellsignalen zum Ansteuern der Aktoren. Die Regelungsvorrichtung ist **dadurch gekennzeichnet, dass** zumindest in einem Übergangsbereich, innerhalb welchem die Sensorsignale digital und analog verarbeitet werden, der Beitrag der jeweiligen Verarbeitung gewichtet wird.

In praktischer Weiterbildung umfasst die Regelungsvorrichtung ferner eine Frequenztrennungseinrichtung zur Auftrennung der Sensorsignale in wenigstens zwei Frequenzbänder, wobei die digital arbeitende Regelungseinrichtung Sensorsignale innerhalb eines ersten Frequenzbandes zu digitalen Aktor-Stellsignalen verarbeitet und die analog arbeitende Regelungseinrichtung Sensorsignale innerhalb eines zweiten Frequenzbandes zu digitalen Aktor-Stellsignalen verarbeitet.

Gemäß bevorzugter Weiterbildungen ist die Frequenztrennungseinrichtung Teil wenigstens einer der Regelungseinrichtungen und/oder Teil der Eingangsschaltung.

Die Sensorsignale liegen somit an den Eingängen beider Teilsysteme bzw. Regelungseinrichtungen an, wobei eine Frequenztrennung bereits vor den Regelungseinrichtungen erfolgen oder innerhalb der Regelungseinrichtung erfolgen kann.

Insbesondere ist vorgesehen, dass die Frequenztrennungseinrichtung anwendungsspezifisch als Frequenzweiche ausgebildet und/oder umfasst frequenzselektierende Filter.

Gemäß praktischen Ausführungen umfasst die Frequenztrennungseinrichtung einen Tiefpass zum Selektieren von digital zu verarbeitenden Stellsignalen und einen Hochpass zum Selektieren von analog zu verarbeitenden Stellsignalen.

Ein derartiger Tiefpass umfasst wiederum anwendungsspezifisch bevorzugt ein digitales Tiefpassfilter oder ein analoges Tiefpassfilter mit nachgeschaltetem AD-Wandler.

Zum Zusammenführen von digitalen Aktor-Stellsignalen der digital arbeitenden Regelungseinrichtung und von analogen Aktor-Stellsignalen der analog arbeitenden Regelungseinrichtung zu gemeinsamen Aktor-Stellsignalen zum Ansteuern der Aktoren, umfasst die Regelungsvorrichtung gemäß vorteilhafter, besonders einfach umzusetzender Ausführung einen DA-Wandler der zum Wandeln der digitalen Aktor-Stellsignale in analoge Signale gekoppelt ist.

Diese gewandelten analogen Signale und die analogen Aktor-Stellsignale der analogen Regelungseinrichtung können somit analog zusammengeführt und den Aktoren nach Zusammenführung zur Ansteuerung entsprechend analog zugeführt werden.

Insbesondere ist eine analoge Summiereinrichtung zum Zusammenführen der Ausgangssignale des DA-Wandlers und der analogen Aktor-Stellsignale der analogen Regelungseinrichtung vorgesehen.

Anwendungsspezifisch umfasst die Regelungsvorrichtung ferner eine Verstärkereinrichtung zum Verstärken der gemeinsamen Aktor-Stellsignale vor Ansteuerung der Aktoren.

Zusammenfassend basiert die Erfindung somit auf der Zusammenführung zweier unterschiedlicher Technologien und stellt folglich eine Art hybride Regelung bereit. Um einem Phasenverlust bei einer digitalen Regelung mit steigender Frequenz entgegenzuwirken, werden die Aufgaben der Regelung in Abhängigkeit des Frequenzbereichs geteilt. Je nach Anwendungsfall und Phasenverlust wird eine Übergangsfrequenz bestimmt, bei der die Regelung von einer digitalen Regelung zu einer analogen Regelung übergeht. Da eine digitale Regelung mit steigender Frequenz unter dem Phasenverlust leidet, wird diese zweckmäßig lediglich in einem unteren Frequenzbereich eingesetzt, wohingegen in einem oberen Frequenzbereich eine analoge Regelung eingesetzt wird. Die Sensoreingänge stehen grundsätzlich beiden Teilsystemen gleichermaßen zur Verfügung, wobei eine Frequenztrennung der Sensorsignale schon vor Einleiten in die jeweilige Regelungseinrichtung erfolgen kann, jedoch nicht zwingend gegeben sein muss. Eine der Regelungseinrichtung digitalisiert die Sensorsignale, die andere verwendet das jeweilige Analogsignal direkt. Die von beiden Regelungsteileinheiten berechneten Ausgangssignale werden analog summiert und bilden damit am Ausgang der kompletten Regelungsvorrichtung gemeinsame Aktor-Stellsignale, welche den gesamten Frequenzbereich abdecken.

Weitere Vorteile und Merkmale der Erfindung werden aus der nachfolgenden Beschreibung zweier bevorzugter Ausführungsbeispiele unter Bezugnahme auf die beigefügten Zeichnungen ersichtlich. In den Zeichnungen zeigen:
Fig. 1 stark vereinfacht eine erfindungsgemäße Regelung, wobei die Frequenzbereichsteilung innerhalb der Regelungsteileinheiten erfolgt,
Fig. 2 eine weitere stark vereinfachte erfindungsgemäße Regelung, bei welcher eine Frequenzbereichsteilung außerhalb der Regelungsteileinheiten erfolgt, und
Fig. 3 eine schematische Darstellung eines beispielhaften Beitrags zur Regelung infolge der Frequenzaufteilung für die beiden Regelungsteileinheiten.

Nachfolgend wird auf die in den Figuren dargestellten beispielhaften Ausführungen der Erfindung Bezug genommen.

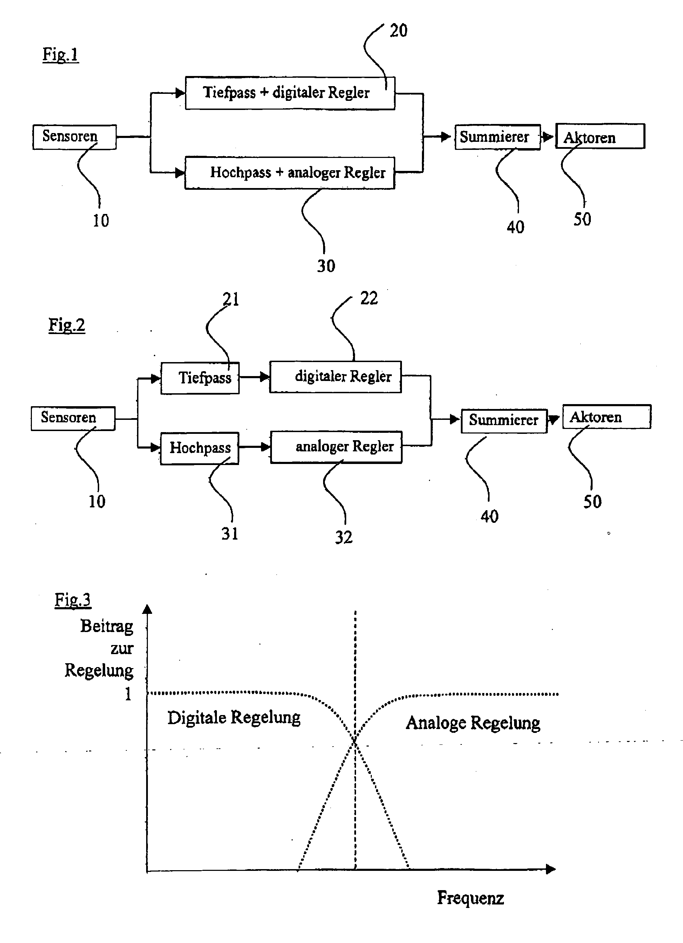

Die in den Figuren 1 und 2 stark vereinfacht dargestellten Regelungsvorrichtungen für aktive Schwingungsisolationssystemanwendungen lassen sich grundsätzlich mittels an sich bekannter elektronischer Komponenten aufbauen. Wie in den Figuren 1 und 2 zu sehen sind eine Anzahl von Sensoren 10 als Schwingungssignalgebern zur Lieferung von analogen Sensorsignalen eingangseitig mit zwei parallel geführten Regelungsstrecken zur Verarbeitung der Sensorsignale in Aktor-Stellsignale verbunden. Die Regelungsstrecken sind ausgangseitig mit einer Anzahl von Aktoren 50 verbunden, so dass die Aktoren durch Zuführung der Aktor-Stellsignale zum Entgegenwirken der erfassten Schwingungen ansteuerbar sind.

Für die erfindungsgemäße Umsetzung umfasst die Regelungsvorrichtungen eine Frequenztrennungseinrichtung, welche eine Frequenztrennung für die beiden Regelungsteileinheiten 20 und 30 bzw. 21 und 31 der Regelungsstrecken sicherzustellen.

Dies kann gemäß Figur 1 z.B. in den Teileinheiten selbst erfolgen. Hierbei umfasst die eine Regelungsstrecke eine digitale Regelungseinrichtung 20, welche neben dem eigentlichen digitalen Regler ferner einen Tiefpass aufweist, der die Signale beschneidet. Der Tiefpass ist beim dargestellten Beispiel ein digitales Tiefpassfilter. Die andere Regelungsstrecke umfasst eine analoge Regelungseinrichtung 20, welche neben dem eigentlichen digitalen Regler ferner einen Hochpass aufweist, der die gewünschte Frequenztrennung bewirkt. Der Hochpass ist beim dargestellten Beispiel ein analoges Hochpassfilter.

Gemäß Figur 2 wird die Frequenztrennung sensorseitig oder in einer den Regelungseinrichtungen vorgeschalteten Eingangsschaltung durchgeführt. Die Frequenztrennung wird gemäß Figur 2 durchgeführt, indem die analogen Sensorsignale mittels einer Frequenzweiche, welche einen Tiefpass 21 und einen Hochpass 31 umfasst, in zwei Frequenzbänder aufgeteilt werden, von denen das untere, durch den Tiefpass 21 bereitgestellte Frequenzband dem digitalen Regler der digitalen Regelungseinrichtung 22 und das obere, durch den Hochpass 31 bereitgestellte Frequenzband dem analogen Regler der analogen Regelungseinrichtung 32 zugeführt wird.

Für den Fachmann ist es ersichtlich, dass die Frequenztrennung je nach Anwendungsfall zweckmäßiger so erfolgt, dass in einem Überlappungsbereich der Frequenzbänder, wie bei Figur 3 zu sehen, keine Überbewertung der Signale stattfindet. Dies kann auf einfache Weise bereits durch eine entsprechende Auswahl, Justierung und/oder Konfiguration der Hochpassfilter und Tiefpassfilter sichergestellt werden. Die bei Figur zu sehende Übergangsfrequenz, um welche herum sich der Überlappungsbereich ausbildet, kann z.B. bei einer Frequenz um etwa 20Hz bis um etwa 70Hz liegen. Die Übergangsfrequenz kann jedoch je nach Anwendungsfall und Phasenverlust des eingesetzten digitalen Reglers gegebenenfalls stark variieren. Unterhalb des Überlappungsbereichs trägt im Wesentlichen ausschließlich die digitale Regelung zur Regelung des Schwingungsisolationssystems bei, wohingegen oberhalb des Überlappungsbereichs die analoge Regelung im Wesentlichen ausschließlich zur Regelung des Schwingungsisolationssystems beiträgt.

Bei beiden in den Figuren 1 und 2 gezeigten Ausführungsformen, werden die digitalen Aktor-Stellsignale, welche zunächst das Ausgangssignal der digitalen Regelungseinrichtung 20 bzw. 22 bilden, mittels eines nicht dargestellten DA-Wandlers in ein analoges Signal zurück gewandelt und anschließend einem analogen Summierer 40 zugeführt, der diese auf das die analogen Aktor-Stellsignale umfassende Ausgangssignal der analogen Regelungseinrichtung 30 bzw. 32 addiert. Dieses aufsummierte Gesamtausgangssignal kann dann einem Verstärker (nicht dargestellt) zugeführt werden, um anschließend einen oder mehrere Aktoren 50 anzusteuern.

Bei einer praktischen Umsetzung sind die Schwingungssignalgeber oder Sensoren 10 in bestimmter, für den Anwendungszweck angepasster Weise um eine zu isolierende Masse angeordnet, zweckmäßiger Weise auch hinsichtlich ihrer Richtungsempfindlichkeit. Die Aktoren 50 sind ebenfalls in geeigneter Weise zu der Masse angeordnet, um diese zu stützen und die Schwingung der Masse gegenüber der Umgebung zu isolieren oder solchen Schwingungen entgegenzuwirken. Ferner sind bei Schwingungsisolationssystemen im Allgemeinen sechs Freiheitsgrade zu beachten, wobei mittels der Anzahl von Sensoren, die Schwingungen innerhalb der sechs Freiheitsgraden aufgenommen werden. Z.B. sind sechs Sensoren, einer für jeden Freiheitsgrad vorgesehen. Üblicherweise sind die gelieferten Sensorsignale mit einander gekoppelt, so dass die Regelungseinrichtungen die Sensorsignale zunächst in entkoppelte Achsensignale verarbeiten, die anschließend noch weiter verarbeitet werden, um Stellsignale am Aktor zu erzeugen. Sind z.B. acht Aktoren vorgesehen, werden je Regelungseinrichtung entsprechend auch acht Aktor-Stellsignale berechnet, wobei auch das aufsummierte Gesamtausgangssignal eine entsprechende Anzahl von Stellsignalen zur Ansteuerung der Aktoren 50 umfasst.

Die erfindungsgemäße Regelungsvorrichtung bzw. das erfindungsgemäße Regelungsverfahren für Schwingungsisolationsanwendungen stellt somit eine hybride Regelung bereit, welche sowohl eine digitale Regelung als auch eine analoge Regelung beinhaltet. Die Vorteile beider Technologien werden in zweckmäßiger Weise genutzt, um in der Gesamtheit eine optimale Parametrisierbarkeit und Regelungsleistung zu ermöglichen. Eine gute Parametrisierbarkeit wird somit insbesondere durch Verwendung eines digitalen Signalprozessors und (software-)einstellbarer Parameter ereicht. Zweckmäßigerweise sind zur weiteren Verbesserung auch Parameter der analogen Regelungsteileinheit(software-)einstellbar, erreicht. Ein minimaler Phasenverlust im höheren Frequenzbereich wird durch Verwendung der analogen Regelung effektiv unterstützt.

Beide Regelungseinrichtungen, die digitale und die analoge Regelungseinrichtung, können folglich jeweils zur optimalen Verarbeitung von Sensorsignalen innerhalb eines bestimmten Frequenzbereichs ausgelegt werden.

## Patentansprüche

1. Verfahren zur Regelung eines Schwingungsisolationssystems, bei welchem mittels einer Anzahl von Schwingungssignalgebern (10) Schwingungen repräsentierende analoge Sensorsignalen geliefert werden, die Sensorsignale in Aktor-Stellsignale verarbeitet und die Aktor-Stellsignale Aktoren zur Ansteuerung zum Entgegenwirken der Schwingungen zugeführt werden,
wobei die Aufgaben der Regelung je nach Frequenzbereich geteilt werden und einige der gelieferten Sensorsignale digitalisiert und in digitale Aktor-Stellsignale verarbeitet werden und andere der gelieferten Sensorsignale analog in analoge Aktor-Stellsignale verarbeitet werden und,
dass die digitalen Aktor-Stellsignale und die analogen Aktor-Stellsignalen zu gemeinsamen Aktor-Stellsignalen zusammengeführt werden, welche den Aktoren zur Ansteuerung zugeführt werden und
dass für die Sensorsignale eine Übergangsfrequenz bestimmt wird, bei welcher von einem digitalen Verarbeiten der Sensorsignale zu einem analogen Verarbeiten der Sensorsignale übergegangen wird, **dadurch gekennzeichnet, dass** zumindest in einem Übergangsbereich, innerhalb welchem die Sensorsignale digital und analog verarbeitet werden, der Beitrag der jeweiligen Verarbeitung gewichtet wird.

2. Verfahren nach vorstehendem Anspruch, ferner **dadurch gekennzeichnet, dass** der Beitrag der jeweiligen Verarbeitung unter Verwendung von frequenzabhängigen Filtern (21, 31) der Sensorsignale gewichtet wird.

3. Verfahren nach einem der beiden vorstehenden Ansprüche, ferner **dadurch gekennzeichnet, dass** die digitalen Aktor-Stellsignale in analogisiert werden und anschließend mit den analogen Aktor-Stellsignalen aufsummiert werden.

4. Regelungsvorrichtung eines Schwingungsisolationssystems mit einer Anzahl von Schwingungssignalgebern (10) zur Lieferung von analogen Sensorsignalen und einer Anzahl von Aktoren (50) zur Schwingungsunterdrückung, welche durch Zuführen von Aktor-Stellsignalen ansteuerbar sind, wobei die Regelungsvorrichtung zum Verarbeiten der Sensorsignale in derartige Aktor-Stellssignale ausgebildet ist, wobei die Aufgaben der Regelung je nach Frequenzbereich geteilt werden und die Regelungsvorrichtung umfasst:
eine digital arbeitende Regelungseinrichtung (20, 22) zum Verarbeiten von Sensorsignalen in digitale, Aktor-Stellsignale und eine analog arbeitende Regelungseinrichtung (30, 32) zum Verarbeiten von Sensorsignalen in analoge Aktor-Stellsignale, sowie
eine mit beiden Regelungseinrichtungen (20, 22, 30, 32) gekoppelte Eingangsschaltung zum Zuführen von Sensorsignalen an die digital arbeitende und an die analog arbeitende Regelungseinrichtung (20, 22, 30, 32), und
eine mit beiden Regelungseinrichtungen (20, 22, 30, 32) ausgangsseitig gekoppelte Ausgangsschaltung (40) zum Zusammenführen von digitalen Aktor-Stellsignalen der digital arbeitenden Regelungseinrichtung und von analogen Aktor-Stellsignalen der analog arbeitenden Regelungseinrichtung zu gemeinsamen Aktor-Stellsignalen zum Ansteuern der Aktoren (50), wobei für die Sensorsignale eine Übergangsfrequenz bestimmt wird, bei welcher von einem digitalen Verarbeiten der Sensorsignale zu einem analogen Verarbeiten der Sensorsignale übergegangen wird, **dadurch gekennzeichnet, dass** zumindest in einem Übergangsbereich, innerhalb welchem die Sensorsignale digital und analog verarbeitet werden, der Beitrag der jeweiligen Verarbeitung gewichtet wird.

5. Regelungsvorrichtung nach vorstehendem Anspruch 4, ferner umfassend eine Frequenztrennungseinrichtung (21, 31) zur Auftrennung der Sensorsignale in wenigstens zwei Frequenzbänder, und wobei digital arbeitende Regelungseinrichtung (22) Sensorsignale innerhalb eines ersten Frequenzbandes zu digitalen Aktor-Stellsignalen verarbeitet und die analog arbeitende Regelungseinrichtung (32) Sensorsignale innerhalb eines zweiten Frequenzbandes zu digitalen Aktor-Stellsignalen verarbeitet.

6. Regelungsvorrichtung nach vorstehendem Anspruch 5,
wobei die Frequenztrennungseinrichtung (21, 31) Teil wenigstens einer der Regelungseinrichtungen ist und/oder Teil der Eingangsschaltung.

7. Regelungsvorrichtung nach einem der zwei vorstehenden Ansprüche 5 und 6, wobei die Frequenztrennungseinrichtung (21, 31) als Frequenzweiche ausgebildet ist und/oder frequenzselektierende Filter umfasst.

8. Regelungsvorrichtung nach einem der drei vorstehenden Ansprüche 5, 6 und 7, wobei die Frequenztrennungseinrichtung (21, 31) einen Tiefpass (21) umfasst, zum Selektieren von digital zu verarbeitenden Stellsignalen und einen Hochpass (31) umfasst, zum Selektieren von analog zu verarbeitenden Stellsignalen.

9. Regelungsvorrichtung nach vorstehendem Anspruch 8,
wobei der Tiefpass (21) ein digitales Tiefpassfilter oder ein analoges Tiefpassfilter mit nachgeschaltetem AD-Wandler umfasst.

10. Regelungsvorrichtung nach einem der vorstehenden Ansprüche 4 bis 9, ferner umfassend einen DA-Wandler der zum Wandeln der digitalen Aktor-Stellsignale in analoge Signale gekoppelt ist.

11. Regelungsvorrichtung nach vorstehendem Anspruch 10, ferner umfassend eine Summiereinrichtung (40) zum Zusammenführen der Ausgangssignale des DA-Wandlers und der analogen Aktor-Stellsignale der analogen Regelungseinrichtung.

12. Regelungsvorrichtung.nach einem der vorstehenden Ansprüche 4 bis 11, umfassend eine Verstärkereinrichtung zum Verstärken der gemeinsamen Aktor-Stellsignale vor Ansteuerung der Aktoren (50).

## Claims

1. Method for controlling a vibration insulation system, in which a number of vibration signal transducers (10) are used to provide analogue sensor signals which represent vibrations, the sensor signals are processed to form actuator control signals and the actuator control signals are supplied to actuators for driving purposes in order to counteract the vibrations,
wherein the tasks of the control process are divided depending upon the frequency range and some of the supplied sensor signals are digitised and processed to form digital actuator control signals and other supplied sensor signals are processed in an analogue manner to form analogue actuator control signals, and
in that the digital actuator control signals and the analogue actuator control signals are combined to form common actuator control signals which are supplied to the actuators for driving purposes, and
in that a transition frequency at which the process changes from digital processing of the sensor signals to analogue processing of the sensor signals is determined for the sensor signals, **characterised in that** the contribution of the respective processing is weighted at least in a transition range within which the sensor signals are processed in a digital and analogue manner.

2. Method as claimed in the preceding Claim, further **characterised in that** the contribution of the respective processing is weighted using frequency-dependent filters (21, 31) for the sensor signals.

3. Method as claimed in any one of the two preceding Claims, further **characterised in that** the digital actuator control signals are converted to analogue form and are then summed with the analogue actuator control signals.

4. Controlling apparatus of a vibration insulation system having a number of vibration signal transducers (10) for providing analogue sensor signals and a number of actuators (50) for suppressing vibrations which can be driven by supplying actuator control signals, wherein the controlling apparatus is designed to process the sensor signals to form such actuator control signals, wherein the tasks of the control process are divided depending upon the frequency range and the controlling apparatus comprises:
a controlling device (20, 22) which operates in a digital manner and is intended to process sensor signals to form digital actuator control signals, and a controlling device (30, 32) which operates in an analogue manner and is intended to process sensor signals to form analogue actuator control signals, as well as an input circuit which is coupled to the two controlling devices (20, 22, 30, 32) and is intended to supply sensor signals to the controlling device (20, 22) which operates in a digital manner and to the controlling device (30, 32) which operates in an analogue manner, and an output circuit (40) which is coupled on the output-side to the two controlling devices (20, 22, 30, 32) and is intended to combine digital actuator control signals from the controlling device which operates in a digital manner and analogue actuator control signals from the controlling device which operates in an analogue manner to form common actuator control signals for driving the actuators (50), wherein a transition frequency at which the process changes from digital processing of the sensor signals to analogue processing of the sensor signals is determined for the sensor signals, **characterised in that** the contribution of the respective processing is weighted at least in one transition range within which the sensor signals are processed in a digital and analogue manner.

5. Controlling apparatus as claimed in the preceding Claim 4, further comprising a frequency separation device (21, 31) for separating the sensor signals into at least two frequency bands, and wherein the controlling device (22) which operates in a digital manner processes sensor signals within a first frequency band to form digital actuator control signals and the controlling device (32) which operates in an analogue manner processes sensor signals within a second frequency band to form digital actuator control signals.

6. Controlling apparatus as claimed in the preceding Claim 5, wherein the frequency separation device (21, 31) is part of at least one of the controlling devices and/or part of the input circuit.

7. Controlling apparatus as claimed in any one of the two preceding Claims 5 and 6,
wherein the frequency separation device (21, 31) is formed as a frequency-separating filter and/or comprises frequency-selecting filters.

8. Controlling apparatus as claimed in any one of the three preceding Claims 5, 6 and 7, wherein the frequency separation device (21, 31) comprises a low-pass filter (21) for selecting control signals which are to be processed in a digital manner, and a high-pass filter (31) for selecting control signals which are to be processed in an analogue manner.

9. Controlling apparatus as claimed in the preceding Claim 8, wherein the low-pass filter (21) comprises a digital low-pass filter or an analogue low-pass filter having a downstream A/D converter.

10. Controlling apparatus as claimed in any one of the preceding Claims 4 to 9, further comprising a D/A converter which is coupled for the purpose of converting the digital actuator control signals into analogue signals.

11. Controlling apparatus as claimed in the preceding Claim 10, further comprising a summing device (40) for combining the output signals from the D/A converter and the analogue actuator control signals from the analogue controlling device.

12. Controlling apparatus as claimed in any one of the preceding Claims 4 to 11, comprising an amplifier device for amplifying the common actuator control signals before driving the actuators (50).

## Revendications

1. Procédé de régulation d'un système d'isolation des vibrations, dans lequel des signaux analogiques de capteurs, représentant des vibrations, sont fournis à l'aide d'un certain nombre de générateurs de signaux de vibrations (10), les signaux de capteurs sont traités afin de donner des signaux de commande d'actionneurs et les signaux de commande d'actionneurs sont envoyés à des actionneurs afin de les attaquer pour s'opposer aux vibrations, les tâches de la régulation étant subdivisées en fonction de domaines de fréquence et certains des signaux de capteurs fournis étant numérisés et traités sous la forme de signaux numériques de commande des actionneurs tandis que d'autres parmi les signaux de capteurs fournis sont traités de manière analogique afin de donner des signaux analogiques de commande des actionneurs, et
en ce que les signaux numériques de commande des actionneurs et les signaux analogiques de commande des actionneurs sont réunis afin de donner des signaux communs de commande des actionneurs qui sont envoyés aux actionneurs pour les attaquer, et
en ce que l'on détermine pour les signaux de capteurs une fréquence de transition à laquelle on passe d'un traitement numérique des signaux de capteurs à un traitement analogique des signaux de capteurs,
**caractérisé en ce que** la contribution des différents traitements est pondérée au moins dans un domaine de transition au sein duquel les signaux de capteurs sont traités numériquement et analogiquement.

2. Procédé selon la revendication précédente, **caractérisé en outre en ce que** la contribution des différents traitements est pondérée en utilisant un filtrage (21, 31) des signaux de capteurs qui dépend de la fréquence.

3. Procédé selon l'une des deux revendications précédentes, **caractérisé en outre en ce que** les signaux numériques de commande des actionneurs sont convertis en signaux analogiques et sont ensuite additionnés aux signaux analogiques de commande des actionneurs.

4. Dispositif de régulation d'un système d'isolation des vibrations, avec un certain nombre de générateurs de signaux de vibrations (10) destinés à fournir des signaux de capteurs analogiques et un certain nombre d'actionneurs (50) destinés à supprimer les vibrations, qui peuvent être attaqués en leur fournissant des signaux de commande d'actionneurs, dans lequel le dispositif de régulation est conçu pour le traitement des signaux de capteurs afin de donner de tels signaux de commande des actionneurs, dans lequel les tâches de la régulation sont subdivisées en fonction de domaines de fréquence et dans lequel le dispositif de régulation comprend :
un dispositif de régulation à fonctionnement numérique (20, 22), destiné à traiter des signaux de capteurs afin de donner des signaux numériques de commande des actionneurs, et un dispositif de régulation à fonctionnement analogique (30, 32), destiné à traiter des signaux de capteurs afin de donner des signaux analogiques de commande des actionneurs, ainsi qu'un circuit d'entrée couplé aux deux dispositifs de régulation (20, 22, 30, 32) afin d'amener des signaux de capteurs aux dispositifs de régulation à fonctionnement numérique et à fonctionnement analogique (20, 22, 30, 32), et un circuit de sortie (40) couplé à la sortie des deux dispositifs de régulation (20, 22, 30, 32), destiné à réunir des signaux numériques de commande des actionneurs du dispositif de régulation à fonctionnement numérique et des signaux analogiques de commande des actionneurs du dispositif de régulation à fonctionnement analogique afin de donner des signaux communs de commande des actionneurs, destinés à attaquer les actionneurs (50), dans lequel il est déterminé pour les signaux de capteurs une fréquence de transition à laquelle s'opère la transition entre le traitement numérique des signaux de capteurs et le traitement analogique des signaux de capteurs,
**caractérisé en ce que** la contribution des différents traitements est pondérée au moins dans un domaine de transition au sein duquel les signaux de capteurs sont traités numériquement et analogiquement.

5. Dispositif de régulation selon la précédente revendication 4, comprenant en outre un dispositif de séparation de fréquences (21, 31) destiné à séparer lès signaux de capteurs en au moins deux bandes de fréquence et dans lequel le dispositif de régulation à fonctionnement numérique (22) traite des signaux de capteurs au sein d'une première bande de fréquences afin de donner des signaux numériques de commande des actionneurs et le dispositif de régulation à fonctionnement analogique (32) traite des signaux de capteurs au sein d'une deuxième bande de fréquences afin de donner des signaux analogiques de commande des actionneurs.

6. Dispositif de régulation selon la précédente revendication 5, dans lequel le dispositif de séparation de fréquences (21, 31) fait partie au moins de l'un des dispositifs de régulation et/ou fait partie du circuit d'entrée.

7. Dispositif de régulation selon l'une des deux précédentes revendication 5 et 6, dans lequel le dispositif de séparation de fréquences (21, 31) prend la forme d'un circuit diviseur de fréquences et/ou comprend des filtres de sélection de fréquences.

8. Dispositif de régulation selon l'une des trois précédentes revendication 5, 6 et 7, dans lequel le dispositif de séparation de fréquences (21, 31) comprend un passe-bas (21) afin de sélectionner des signaux de commande à traiter numériquement et un passe-haut (31) afin de sélectionner des signaux de commande à traiter analogiquement.

9. Dispositif de régulation selon la précédente revendication 8, dans lequel le passe-bas (21) est un filtre numérique passe-bas ou un filtre analogique passe-bas avec un convertisseur analogique-numérique monté en aval.

10. Dispositif de régulation selon l'une des précédentes revendication 4 à 9, comprenant en outre un convertisseur numérique-analogique qui est monté afin de convertir les signaux numériques de commande des actionneurs en signaux analogiques.

11. Dispositif de régulation selon la précédente revendication 10, comprenant en outre un dispositif de sommation (40) destiné à réunir les signaux de sortie du convertisseur numérique-analogique et les signaux analogiques de commande des actionneurs du dispositif analogique de régulation.

12. Dispositif de régulation selon l'une des précédentes revendication 4 à 11, comprenant un dispositif d'amplification destiné à amplifier les signaux communs de commande des actionneurs avant l'attaque des actionneurs (50).
